(19) Europäisches Patentamt
European Patent Office
Office européen des brevets

(11) **EP 4 006 180 A1**

(12) **EUROPEAN PATENT APPLICATION**
published in accordance with Art. 153(4) EPC

(43) Date of publication:
**01.06.2022 Bulletin 2022/22**

(21) Application number: **20846097.2**

(22) Date of filing: **20.07.2020**

(51) International Patent Classification (IPC):
*C21D 8/02* (2006.01)    *C22C 38/00* (2006.01)
*C22C 38/12* (2006.01)    *C22C 38/58* (2006.01)

(52) Cooperative Patent Classification (CPC):
**C21D 8/02; C22C 38/00; C22C 38/12; C22C 38/58**

(86) International application number:
**PCT/JP2020/028166**

(87) International publication number:
**WO 2021/020220 (04.02.2021 Gazette 2021/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.07.2019 JP 2019141503**

(71) Applicant: **JFE Steel Corporation**
**Tokyo 100-0011 (JP)**

(72) Inventors:
• **IZUMI, Daichi**
**Tokyo 100-0011 (JP)**

• **SHIMAMURA, Junji**
**Tokyo 100-0011 (JP)**
• **TAMURA, Yuta**
**Tokyo 100-0011 (JP)**
• **IHARA, Koichi**
**Tokyo 100-0011 (JP)**
• **TANIZAWA, Akihiko**
**Tokyo 100-0011 (JP)**

(74) Representative: **Grünecker Patent- und Rechtsanwälte**
**PartG mbB**
**Leopoldstraße 4**
**80802 München (DE)**

(54) **HIGH-STRENGTH STEEL SHEET FOR SOUR RESISTANT LINE PIPE, MANUFACTURING METHOD THEREOF, AND HIGH-STRENGTH STEEL PIPE MADE USING HIGH-STRENGTH STEEL SHEET FOR SOUR RESISTANT LINE PIPE**

(57) Provided is a high strength steel plate for a sour-resistant line pipe excellent not only in HIC resistance but also in SSCC resistance in environments containing hydrogen sulfide of more than 1 bar and in SSCC resistance in environments with a low hydrogen sulfide partial pressure of 1 bar. The steel plate comprises a chemical composition containing, in mass%, C: 0.020 % to 0.080 %, Si: 0.01 % to 0.50 %, Mn: 0.50 % to 1.80 %, P: 0.015 % or less, S: 0.0015 % or less, Al: 0.010 % to 0.080 %, N: 0.0010 % to 0.0080 %, Mo: 0.01 % to 0.50 %, and Ca: 0.0005 % to 0.0050 %, with a balance consisting of Fe and inevitable impurities, wherein a steel microstructure at 0.25 mm below a surface of the steel plate is bainitic microstructure, and an area ratio of crystal grains having a KAM value of 0.4 or more in the bainite is 50 % or less, maximum Vickers hardness at 0.25 mm below the surface of the steel plate is 230 Hv or less, and a tensile strength is 520 MPa or more.

FIG. 1

**Description**

TECHNICAL FIELD

The present disclosure relates to a high strength steel plate for a sour-resistant line pipe having excellent steel plate material homogeneity and suitable for use in a line pipe used for transportation of crude oil or natural gas, and a production method therefor. The present disclosure also relates to a high strength steel pipe using the high strength steel plate for a sour-resistant line pipe.

BACKGROUND

A line pipe is typically produced by forming a steel plate produced by a plate mill or a hot rolling mill into a steel pipe by UOE forming, press bend forming, roll forming, or the like.

Line pipes used for transportation of crude oil or natural gas containing hydrogen sulfide are required to have sour resistance such as hydrogen induced cracking (HIC) resistance and sulfide stress corrosion cracking (SSCC) resistance, in addition to strength, toughness, weldability, and the like. HIC is the following phenomenon: Hydrogen ions due to corrosion reaction adsorb to the surface of steel material and enter into the steel as atomic hydrogen, diffuse and accumulate around nonmetallic inclusions such as MnS and hard secondary phase in the steel, and become molecular hydrogen, the internal pressure of which causes cracking. HIC is considered problematic in line pipes having low strength relative to oil country tubular goods, and a number of countermeasures have been disclosed. Meanwhile, SSCC is known to occur in high hardness regions of welds, and normally has not been regarded as a significant problem in high strength seamless steel pipes for oil wells or line pipes having relatively low hardness. In recent years, however, the mining environments for crude oil and natural gas have become increasingly severe, and it has been reported that SSCC occurs in base metal portions of line pipes in environments with high hydrogen sulfide partial pressure or low pH. This has raised the importance of controlling the hardness of the surface layer of the inner surface of a steel pipe and improving the SSCC resistance in severer corrosion environments. Moreover, microcracking called fissure may occur in environments with relatively low hydrogen sulfide partial pressure. SSCC is likely to occur in this case, too.

Typically, the thermo-mechanical control process (TMCP) technology that combines controlled rolling and controlled cooling is used in production of high strength steel plates for line pipes. An effective way of enhancing the strength of steel material using the TMCP technology is to increase the cooling rate in controlled cooling. In the case where controlled cooling is performed at a high cooling rate, however, the surface layer of the steel plate is cooled rapidly, and consequently increases in hardness as compared with the inside of the steel plate. Further, strain hardening is induced when forming the steel plate into a pipe, as a result of which the hardness of the surface layer increases and the SSCC resistance decreases.

To solve the above-stated problem, for example, JP 6369658 B2 (PTL 1) proposes a technique of performing multistage cooling after hot rolling to limit the maximum hardness in the region from the surface of a steel pipe to 1.0 mm in depth to 250 Hv or less. JP 2011-017048 A (PTL 2) proposes performing low-temperature heat treatment to limit the hardness of a steel pipe to 220 Hv or less and increase the HIC resistance.

CITATION LIST

Patent Literature

   PTL 1: JP 6369658 B2
   PTL 2: JP 2011-017048 A

SUMMARY

(Technical Problem)

The technique described in PTL 1 can improve the SSCC resistance in environments containing hydrogen sulfide with a partial pressure of more than 0.1 MPa (1 bar), but does not address SSCC caused by microcracking called fissure in environments with low hydrogen sulfide partial pressure. The technique described in PTL 2 does not provide a means of improving the SSCC resistance in environments with high hydrogen sulfide partial pressure, unlike the HIC resistance which is evaluated in an NACE test performed with hydrogen sulfide gas being saturated in a solution.

It could therefore be helpful to provide a high strength steel plate for a sour-resistant line pipe excellent not only in HIC resistance but also in SSCC resistance in environments containing hydrogen sulfide with a partial pressure of more than 1 bar and in SSCC resistance in environments with low hydrogen sulfide partial pressure, together with an advantageous production method therefor. It could also be helpful to provide a high strength steel pipe using the high strength steel plate for a sour-resistant line pipe.

(Solution to Problem)

We conducted many experiments and studies on the chemical compositions, microstructures, and production conditions of steel materials in order to ensure SSCC resistance in severer corrosion environments. We consequently discovered the following: By limiting the steel microstructure at 0.25 mm below the surface of a steel plate to bainitic microstructure and limiting the area ratio of crystal grains having a kernel average misorientation (KAM) value of 0.4 or more in the bainite to 50 % or less, the maximum hardness at 0.25 mm below the surface of the steel plate can be limited to 230 or less of HV 0.1, with it being possible to produce a high strength steel pipe having improved SSCC resistance. To obtain such steel microstructure, the cooling rate after rolling needs to be controlled exactly. We successfully discovered the conditions for such control. The present disclosure is based on these discoveries.

We thus provide:

[1] A high strength steel plate for a sour-resistant line pipe, comprising a chemical composition containing (consisting of), in mass%, C: 0.020 % to 0.080 %, Si: 0.01 % to 0.50 %, Mn: 0.50 % to 1.80 %, P: 0.015 % or less, S: 0.0015 % or less, Al: 0.010 % to 0.080 %, N: 0.0010 % to 0.0080 %, Mo: 0.01 % to 0.50 %, and Ca: 0.0005 % to 0.0050 %, with a balance consisting of Fe and inevitable impurities, wherein a steel microstructure at 0.25 mm below a surface of the steel plate is bainitic microstructure, and an area ratio of crystal grains having a kernel average misorientation (KAM) value of 0.4 or more in the bainitic microstructure is 50 % or less, a maximum value of Vickers hardness at 0.25 mm below the surface of the steel plate is 230 Hv or less, and a tensile strength is 520 MPa or more. Herein, the KAM value is the average value of the orientation differences between adjacent pixels (0.3 $\mu$m pitch) in a crystal grain, which is calculated from electron backscatter diffraction (EBSD) analysis.
[2] The high strength steel plate for a sour-resistant line pipe according to [1], wherein the chemical composition further contains, in mass%, one or more selected from the group consisting of Cu: 0.30 % or less, Ni: 0.10 % or less, and Cr: 0.50 % or less.
[3] The high strength steel plate for a sour-resistant line pipe according to [1] or [2], wherein the chemical composition further contains, in mass%, one or more selected from the group consisting of Nb: 0.005 % to 0.1 %, V: 0.005 % to 0.1 %, Ti: 0.005 % to 0.1 %, Zr: 0.0005 % to 0.02 %, Mg: 0.0005 % to 0.02 %, and REM: 0.0005 % to 0.02 %.
[4] A production method for a high strength steel plate for a sour-resistant line pipe, comprising: heating a slab having the chemical composition recited in any one of [1] to [3] to a temperature of 1000 °C to 1300 °C, and thereafter hot rolling the slab to obtain a steel plate; and thereafter cooling the steel plate under conditions that: a temperature of a surface of the steel plate at cooling start is ($Ar_3$ - 10) °C or more; an average cooling rate from 750 °C to 550 °C in terms of a temperature at 0.25 mm below the surface of the steel plate is 20 °C/s to 50 °C/s; an average cooling rate from 750 °C to 550 °C in terms of an average temperature of the steel plate is 15 °C/s or more; and a cooling stop temperature in terms of a temperature at 0.25 mm below the surface of the steel plate is 250 °C to 550 °C.
[5] A high strength steel pipe using the high strength steel plate for a sour-resistant line pipe recited in any one of [1] to [3].

(Advantageous Effect)

A high strength steel plate for a sour-resistant line pipe and a high strength steel pipe using the high strength steel plate for a sour-resistant line pipe according to the present disclosure are excellent not only in HIC resistance but also in SSCC resistance in environments containing hydrogen sulfide with a partial pressure of more than 1 bar and in SSCC resistance in environments with a low hydrogen sulfide partial pressure of 1 bar or less. A production method for a high strength steel plate for a sour-resistant line pipe according to the present disclosure can produce a high strength steel plate for a sour-resistant line pipe excellent not only in HIC resistance but also in SSCC resistance in environments containing hydrogen sulfide with a partial pressure of more than 1 bar and in SSCC resistance in environments with a low hydrogen sulfide partial pressure of 1 bar or less.

BRIEF DESCRIPTION OF THE DRAWINGS

In the accompanying drawings:

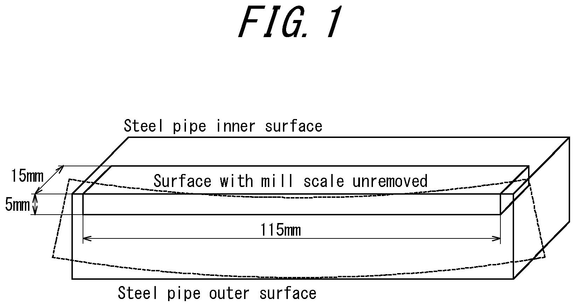

FIG. 1 is a schematic diagram explaining a method of collecting a test piece for evaluation of SSCC resistance in examples.

DETAILED DESCRIPTION

A high strength steel plate for a sour-resistant line pipe according to the present disclosure will be described in detail below.

[Chemical composition]

The chemical composition of the high strength steel plate according to the present disclosure and the reasons for limiting the chemical composition will be described below. In the following description, "%" is mass% unless otherwise stated.

C: 0.020 % to 0.080 %

C effectively contributes to improved strength. If the C content is less than 0.020 %, sufficient strength cannot be ensured. The C content is therefore 0.020 % or more, and preferably 0.025 % or more. If the C content is more than 0.080 %, the hardness of the surface layer or the central segregation area increases during accelerated cooling, causing degradation in SSCC resistance and HIC resistance. The toughness is degraded, too. The C content is therefore 0.080 % or less, and preferably 0.070 % or less.

Si: 0.01 % to 0.50 %

Si is added for deoxidation. If the Si content is less than 0.01 %, the deoxidation effect is insufficient. The Si content is therefore 0.01 % or more, and preferably 0.05 % or more. If the Si content is more than 0.50 %, the toughness and the weldability are degraded. The Si content is therefore 0.50 % or less, and preferably 0.45 % or less.

Mn: 0.50 % to 1.80 %

Mn effectively contributes to improved strength and toughness. If the Mn content is less than 0.50 %, the effect is insufficient. The Mn content is therefore 0.50 % or more, and preferably 0.80 % or more. If the Mn content is more than 1.80 %, the hardness of the surface layer or the central segregation area increases during accelerated cooling, causing degradation in SSCC resistance and HIC resistance. The weldability is degraded, too. The Mn content is therefore 1.80 %, and preferably 1.70 % or less.

P: 0.015 % or less

P is an inevitable impurity element. P degrades the weldability, and also increases the hardness of the surface layer or the central segregation area, thus causing degradation in SSCC resistance and HIC resistance. This tendency is noticeable when the P content is more than 0.015 %. Accordingly, the upper limit is 0.015 %. The P content is preferably 0.008 % or less. Although the P content is desirably as low as possible, the P content is preferably 0.001 % or more from the viewpoint of the refining costs.

S: 0.0015 % or less

S is an inevitable impurity element. Since S forms a MnS inclusion in the steel and degrades the HIC resistance, the S content is desirably low, but up to 0.0015 % is allowable. The S content is preferably 0.0010 % or less. Although the S content is desirably as low as possible, the S content is preferably 0.0002 % or more from the viewpoint of the refining costs.

Al: 0.010 % to 0.080 %

Al is added as a deoxidizer. If the Al content is less than 0.010 %, the effect is insufficient. The Al content is therefore 0.010 % or more, and preferably 0.015 % or more. If the Al content is more than 0.080 %, the cleanliness of the steel decreases, and the toughness is degraded. The Al content is therefore 0.080 % or less, and preferably 0.070 % or less.

N: 0.0010 % to 0.0080 %

N effectively contributes to improved strength. If the N content is less than 0.0010 %, sufficient strength cannot be ensured. The N content is therefore 0.0010 % or more, and preferably 0.0015 % or more. If the N content is more than 0.0080 %, the hardness of the surface layer or the central segregation area increases during accelerated cooling, causing degradation in SSCC resistance and HIC resistance. The toughness is degraded, too. The N content is therefore 0.0080 % or less, and preferably 0.0070 % or less.

Mo: 0.01 % to 0.50 %

Mo is an element effective in improving the toughness and increasing the strength, and effective in improving the SSCC resistance regardless of the hydrogen sulfide partial pressure. We discovered that, in the case where a Mo-containing steel plate is subjected to an SSCC test, the surface of the steel plate after the test is smoother than the surface of a non-Mo-containing steel plate after the SSCC test. Although the mechanism is not clear, this seems to relate to the improvement of the SSCC resistance. To achieve this effect, the Mo content needs to be 0.01 % or more. The Mo content is preferably 0.10 % or more. If the Mo content is excessively high, the hardenability is excessively high. As a result, the hardness of the surface layer or the central segregation area increases during accelerated cooling, causing degradation in SSCC resistance. The weldability is degraded, too. The Mo content is therefore 0.50 % or less, and preferably 0.40 % or less.

Ca: 0.0005 % to 0.0050 %

Ca is an element effective in improving the HIC resistance by morphological control of sulfide inclusions. If the Ca content is less than 0.0005 %, the effect by addition of Ca is insufficient. The Ca content is therefore 0.0005 % or more, and preferably 0.0008 % or more. If the Ca content is more than 0.0050 %, not only the effect is saturated, but also the cleanliness of the steel decreases, causing degradation in HIC resistance. The Ca content is therefore 0.0050 %, and preferably 0.0045 % or less.

While the basic components according to the present disclosure have been described above, the chemical composition according to the present disclosure may optionally contain one or more selected from the group consisting of Cu, Ni, and Cr in the following ranges for further improvement in the strength and toughness of the steel plate.

Cu: 0.30 % or less

Cu is an element effective in improving the toughness and increasing the strength. To achieve this effect, the Cu content is preferably 0.05 % or more. If the Cu content is more than 0.30 %, microcracking called fissure tends to occur in environments with a low hydrogen sulfide partial pressure of less than 1 bar. Accordingly, in the case of adding Cu, the upper limit is 0.30 %. The Cu content is preferably 0.25 % or less.

Ni: 0.10 % or less

Ni is an element effective in improving the toughness and increasing the strength. To achieve this effect, the Ni content is preferably 0.01 % or more. If the Ni content is more than 0.10 %, microcracking called fissure tends to occur in environments with a low hydrogen sulfide partial pressure of less than 1 bar. Accordingly, in the case of adding Ni, the upper limit is 0.10 %. The Ni content is preferably 0.02 % or less.

Cr: 0.50 % or less

Cr is an element effective in obtaining sufficient strength even when the C content is low, as with Mn. To achieve this effect, the Cr content is preferably 0.05 % or more. If the Cr content is excessively high, the hardenability is excessively high. As a result, the hardness of the surface layer or the central segregation area increases during accelerated cooling, causing degradation in SSCC resistance. The weldability is degraded, too. Accordingly, in the case of adding Cr, the upper limit is 0.50 %. The Cr content is preferably 0.45 % or less.

The chemical composition according to the present disclosure may optionally further contain one or more selected from the group consisting of Nb, V, Ti, Zr, Mg, and REM in the following ranges.

One or more selected from the group consisting of Nb: 0.005 % to 0.1 %, V: 0.005 % to 0.1 %, Ti: 0.005 % to 0.1 %, Zr: 0.0005 % to 0.02 %, Mg: 0.0005 % to 0.02 %, and REM: 0.0005 % to 0.02 %

Nb, V, and Ti are each an element that may be optionally added in order to enhance the strength and toughness of the steel plate. If the content of each of these elements is less than 0.005 %, the effect is insufficient. Accordingly, in the case of adding any of these elements, the content is preferably 0.005 % or more. If the content of each of these elements is more than 0.1 %, the toughness of the weld is degraded. Accordingly, in the case of adding any of these elements, the content is preferably 0.1 % or less.

Zr, Mg, and REM are each an element that may be optionally added in order to enhance the toughness through crystal grain refinement and/or enhance the cracking resistance through control of inclusion characteristics. If the content of each of these elements is less than 0.0005 %, the effect is insufficient. Accordingly, in the case of adding any of these elements, the content is preferably 0.0005 % or more. If the content of each of these elements is more than 0.02 %, the effect is saturated. Accordingly, in the case of adding any of these elements, the content is preferably 0.02 % or less.

The present disclosure discloses a technique for improving the SSCC resistance of a high strength steel pipe using a high strength steel plate for a sour-resistant line pipe. As the sour resistance, the HIC resistance needs to be satisfied, too. For example, a CP value calculated according to the following Formula (1) is preferably 1.00 or less. In the formula, 0 is assigned for each element not added.

$$CP = 4.46[\%C] + 2.37[\%Mn]/6 + (1.74[\%Cu] + 1.7[\%Ni])/15 + (1.18[\%Cr] + 1.95[\%Mo] + 1.74[\%V])/5 + 22.36[\%P] \quad \ldots (1)$$

where [%X] denotes the content (mass%) of element X in the steel.

The formula for calculating the CP value is designed to estimate the material property of the central segregation area from the content of each alloying element. When the CP value calculated according to Formula (1) is higher, the component concentration in the central segregation area is higher, and the hardness of the central segregation area increases. By limiting the CP value according to Formula (1) to 1.00 or less, cracking in the HIC test can be prevented. When the CP value is lower, the hardness of the central segregation area is lower. Hence, in the case where higher HIC resistance is needed, the upper limit of the CP value may be 0.95.

The balance other than the elements described above consists of Fe and inevitable impurities. The inclusion of other trace elements is tolerable as long as the effects according to the present disclosure are not undermined. For example, O is an element inevitably contained in steel. A O content of 0.0050 % or less is allowable. The O content is preferably 0.0040 % or less.

[Microstructure of steel plate]

The steel microstructure of the high strength steel plate for a sour-resistant line pipe according to the present disclosure will be described below.

The steel microstructure at 0.25 mm below the surface of the steel plate needs to be bainitic microstructure, in order to reduce the maximum hardness at 0.25 mm below the surface of the steel plate to not greater than a certain level and improve the SSCC resistance. Preferably, the whole steel microstructure is bainitic microstructure, in order to achieve high strength of 520 MPa or more in tensile strength. In particular, in the case where hard phase such as martensite or martensite austenite constituent (MA) forms in the surface layer, the hardness of the surface layer increases, and variations in hardness in the steel plate increase, which impairs the material homogeneity. To prevent the increase of the hardness of the surface layer, the steel microstructure of the surface layer is bainitic microstructure.

Herein, the bainitic microstructure includes a microstructure called bainitic ferrite or granular ferrite generated as a result of transformation during or after accelerated cooling and contributing to transformation strengthening. If any other microstructure such as ferrite, martensite, pearlite, martensite austenite constituent, or retained austenite is mixed in the bainitic microstructure, the strength decreases, the toughness is degraded, and the hardness of the surface layer increases. Hence, the proportion of microstructure other than bainitic phase is desirably as low as possible. However, in the case where the volume fraction of microstructure other than bainitic phase is sufficiently low, the influence of such microstructure is negligible. Accordingly, the inclusion of up to a certain amount of microstructure other than bainitic phase is allowable. Specifically, in the present disclosure, 5 % or less in terms of the total volume fraction of steel microstructures other than bainite (such as ferrite, martensite, pearlite, martensite austenite constituent, and retained austenite) is allowable as their influence is negligible.

There are various forms of bainitic microstructure depending on the cooling rate. In the present disclosure, it is important that the microstructure of the outermost surface layer of the steel plate, specifically the steel microstructure at 0.25 mm below the surface of the steel plate, is bainitic microstructure and the area ratio of crystal grains having a KAM value of 0.4 or more in the bainite is 50 % or less. A KAM value reflects a local crystal orientation change due to a dislocation in microstructure. A higher KAM value indicates that the degree of local deformation in a grain is higher. Thus, in the case where the KAM value is high, high transformation strain is introduced in bainitic microstructure, meaning the grain is low-temperature transformation phase. Since low-temperature transformation phase is hard microstructure, if the proportion of low-temperature transformation phase is high, the SSCC resistance is degraded. In particular, crystal grains having a KAM value of 0.4 or more are low-temperature transformation phase, and thus have high hardness. If the proportion of crystal grains having a KAM value of 0.4 or more is more than 50 %, cracks propagate easily, so that the SSCC resistance is degraded significantly. Accordingly, the area ratio of crystal grains having a KAM value of 0.4 or more in the bainite needs to be 50 % or less. In the high strength steel plate according to the present disclosure, in the case where the steel microstructure at 0.25 mm below the surface of the steel plate satisfies the foregoing conditions, the outermost surface layer from the surface of the steel plate to 0.25 mm in depth has the same steel microstructure, as a result of which the SSCC resistance improving effect can be achieved.

By limiting the steel microstructure at 0.25 mm below the surface of the steel plate to bainitic microstructure, limiting the area ratio of crystal grains having a KAM value of 0.4 or more in the bainite to 50 % or less, and further limiting the maximum hardness of HV 0.1 at 0.25 mm below the surface to 230 or less, the SSCC resistance of a pipe after pipe formation from the steel plate can be ensured.

The high strength steel plate according to the present disclosure is a steel plate for a steel pipe having a strength greater than or equal to API 5L grade X60, and accordingly has a tensile strength of 520 MPa or more.

[Production method]

A production method and production conditions for producing the high strength steel plate for a sour-resistant line pipe will be described in detail below. The production method according to the present disclosure includes heating a slab having the above-described chemical composition, thereafter hot rolling the slab to obtain a steel plate, and thereafter subjecting the steel plate to controlled cooling under predetermined conditions.

[Slab heating temperature]

Slab heating temperature: 1000 °C to 1300 °C

If the slab heating temperature is less than 1000 °C, the dissolution of carbides is insufficient, and the degree of solid solution strengthening is low, so that the required strength cannot be obtained. If the slab heating temperature is more than 1300 °C, crystal grains coarsen extremely, and the toughness is degraded. The slab heating temperature is therefore 1000 °C to 1300 °C. The slab heating temperature is preferably 1030 °C to 1250 °C. The slab is heated to its center to this temperature.

[Rolling finish temperature]

In the hot rolling, the rolling finish temperature is desirably as low as possible in order to obtain high base metal toughness. If the rolling finish temperature is low, however, the rolling efficiency decreases. Hence, the rolling finish temperature at the surface of the steel plate needs to be set in consideration of the required base metal toughness and the rolling efficiency. From the viewpoint of improving the strength and the HIC resistance, the rolling finish temperature is preferably $Ar_3$ transformation point or more in terms of the surface temperature of the steel plate. The $Ar_3$ transformation point denotes ferrite transformation start temperature during cooling, and can be calculated, for example, from the components of the steel using the following formula. The surface temperature of the steel plate can be measured using a radiation thermometer or the like.

$$Ar_3 \ (°C) = 910 - 310[\%C] - 80[\%Mn] - 20[\%Cu] - 15[\%Cr] - 55[\%Ni] - 80[\%Mo]$$

where [%X] denotes the content (mass%) of element X in the steel.

[Cooling start temperature in controlled cooling]

Cooling start temperature: ($Ar_3$ - 10) °C or more in terms of surface temperature of steel plate

If the surface temperature of the steel plate at the cooling start is low, the amount of ferrite formed before the controlled cooling increases. In particular, in the case where cooling starts from a temperature that has dropped from the $Ar_3$ transformation point by more than 10 °C, ferrite forms at a volume fraction of more than 5 %, and the strength further decreases and also the HIC resistance is degraded. Accordingly, the surface temperature of the steel plate at the cooling start is (Ar$_3$ - 10) °C or more.

[Cooling rate in controlled cooling]

To prevent an increase in hardness at 0.25 mm below the surface of the steel plate, it is important to control the cooling rate in the surface layer to control bainitic microstructure.

Average cooling rate from 750 °C to 550 °C at 0.25 mm below surface of steel plate: 20 °C/s to 50 °C/s

It is important to lower the average cooling rate from 750 °C to 550 °C in terms of a temperature at 0.25 mm below the surface of the steel plate as much as possible to form high-temperature transformation phase. A lower cooling rate contributes to lower maximum hardness. Since the temperature range from 750 °C to 550 °C is a crucial temperature range in bainite transformation, it is important to control the cooling rate in this temperature range. If the cooling rate is more than 50 °C/s, the proportion of low-temperature transformation phase is high, and the maximum hardness of HV 0.5 at 0.25 mm below the surface of the steel plate is more than 230, so that the SSCC resistance after pipe formation is degraded. The average cooling rate is therefore 50 °C/s or less. The average cooling rate is preferably 30 °C/s or less. Although no lower limit is placed on the average cooling rate, if the cooling rate is excessively low, ferrite and pearlite form, causing insufficient strength. To prevent this, the average cooling rate is preferably 20 °C/s or more. Regarding cooling from 550 °C in terms of a temperature at 0.25 mm below the surface of the steel plate, if the cooling rate is low, there is a possibility that cooling cannot be performed in a stable nucleate boiling state, and the hardness varies in the outermost surface layer of the steel plate and the maximum value of Vickers hardness increases. Accordingly, the average cooling rate from 550 °C to the cooling stop temperature in terms of a temperature at 0.25 mm below the surface of the steel plate is preferably 150 °C/s or more.

Average cooling rate from 750 °C to 550 °C in terms of average temperature of steel plate: 15 °C/s or more

If the average cooling rate from 750 °C to 550 °C in terms of the average temperature of the steel plate is less than 15 °C/s, bainitic microstructure cannot be obtained, and the strength decreases and the HIC resistance is degraded. Accordingly, the cooling rate in terms of the average temperature of the steel plate is 15 °C/s or more. From the viewpoint of suppressing variations in the strength and hardness of the steel plate, the cooling rate in terms of the average temperature of the steel plate is preferably 20 °C/s or more. Although no upper limit is placed on the average cooling rate, the average cooling rate is preferably 40 °C/s or less to prevent excessive formation of low-temperature transformation phase.

The temperature at 0.25 mm below the surface of the steel plate and the average temperature of the steel plate cannot be physically measured directly, but can be determined in real time, for example, from the result of calculating the temperature distribution in a section along the plate thickness by difference calculation using a process computer based on the surface temperature at the cooling start measured with a radiation thermometer and the target surface temperature at the cooling stop. Herein, the temperature at 0.25 mm below the surface of the steel plate in the temperature distribution is referred to as "temperature at 0.25 mm below the surface of the steel plate", and the average temperature in the plate thickness direction in the temperature distribution is referred to as "average temperature of the steel plate".

[Cooling stop temperature]

Cooling stop temperature: 250 °C to 550 °C in terms of temperature at 0.25 mm below surface of steel plate

If the cooling stop temperature is more than 550 °C, bainite transformation is incomplete, and sufficient strength cannot be obtained. If the cooling stop temperature is less than 250 °C, the dislocation density is high, and the hardness of the surface layer after pipe formation increases considerably, causing degradation in SSCC resistance.

[High strength steel pipe]

By forming the high strength steel plate according to the present disclosure into a pipe shape by press bend forming, roll forming, UOE forming, or the like and thereafter welding the butting portions, a high strength steel pipe (UOE steel pipe, electric resistance welded steel pipe, spiral steel pipe, etc.) for a sour-resistant line pipe having excellent steel plate material homogeneity and suitable for transportation of crude oil or natural gas can be produced. The steel pipe produced using the high strength steel plate according to the present disclosure has excellent SSCC resistance even in the case where there is a high hardness region of a weld.

For example, a UOE steel pipe is produced by milling and beveling the edges of a steel plate, forming the steel plate into a steel pipe shape by C press, U-ing press, and O-ing press, then seam welding the butting portions by inside welding and outside welding, and optionally subjecting it to pipe expansion. Any welding method may be used as long as sufficient joint strength and joint toughness are ensured, yet it is preferable to use submerged arc welding from the viewpoint of excellent weld quality and production efficiency. A steel pipe produced by forming a steel plate into a pipe shape by press bend forming and then seam welding the butting portions may be subjected to pipe expansion, too.

EXAMPLES

Steels having the chemical compositions listed in Table 1 (steel sample IDs A to W) were prepared and subjected to continuous casting to obtain slabs. Each slab thus obtained was heated to the temperature listed in Table 2, and then hot rolled with the rolling finish temperature listed in Table 2, to obtain a steel plate with the plate thickness listed in Table 2. Each steel plate was then subjected to controlled cooling using a water cooling type controlled cooling device under the conditions listed in Table 2. After this, the edges of the steel plate were milled and beveled, and the steel plate was formed into a steel pipe shape by C press, U-ing press, and O-ing press. Subsequently, the butting portions of the inner surface and the outer surface were seam welded by submerged arc welding, and pipe expansion was performed to obtain a steel pipe.

[Identification of microstructure]

The microstructure of each steel plate obtained as described above was observed with an optical microscope and a scanning electron microscope. In detail, a sample for metallic microstructure observation was collected from a plate transverse center part of the steel plate. A section of the sample parallel to the rolling direction was mirror polished, and then etched with nital. The section was then photographed using an optical microscope randomly for five observation fields at 400 to 1000 magnification, and the microstructure proportions were calculated by image analysis processing. The results for the microstructures at a position of 0.25 mm below the surface of the steel plate and at a position of the plate thickness center are shown in Table 2. Further, electron backscatter diffraction (EBSD) analysis (measurement step: 0.3 $\mu$m) was performed on the microstructure at a position of 0.25 mm below the surface of the steel plate. The observation field for the EBSD analysis was set to 500 $\mu$m $\times$ 200 $\mu$m. From the result of the EBSD analysis, areas having an orientation difference of 5 degrees or more were considered as grain boundaries and a boundary map was created. From the result of the EBSD analysis, a KAM map was also created through illustrating the distribution of KAM values which are each the average value of the orientation differences between adjacent pixels in a crystal grain. The created boundary map and KAM map were overlaid one on top of the other, 100 crystal grains were selected randomly, and the bainite area ratio of the KAM value of 0.4 or more was measured. The measurement results are listed in Table 2.

[Measurement of tensile strength]

A tensile test was conducted using full-thickness test pieces in a direction orthogonal to the rolling direction as tensile test pieces, to measure the tensile strength and the yield stress. The results are listed in Table 2.

[Measurement of Vickers hardness]

For a section orthogonal to the rolling direction, the Vickers hardness (HV 0.5) was measured at 100 locations at a position of 0.25 mm below the surface of the steel pipe in accordance with JIS Z 2244, and the maximum hardness was obtained. The obtained maximum hardness is listed in Table 2. The measurement was performed in HV 0.5 instead of HV 10 which is commonly used, because the indentation size is reduced in measurement of HV 0.5 and as a result hardness information at a position closer to the surface or hardness information more sensitive to microstructure can be obtained. In measurement of less than HV 0.5, the indentation size is excessively small, and the measurement variations increase. The maximum hardness was used in the evaluation instead of the average hardness, because cracks tend to grow if there are local hard parts.

[Evaluation of SSCC resistance]

For the SSCC resistance, after a test piece (coupon) cut out from each obtained steel pipe was flattened, an SSCC test piece of 5 mm $\times$ 15 mm $\times$ 115 mm was collected from the inner surface of the steel pipe. Here, not only a test piece containing only the base metal and not containing the weld but also a test piece containing both the weld and the base metal was collected. Mill scale was not removed from the inner surface to be tested, to leave the state of the surface layer intact. That is, the test piece included a position of 0.25 mm below the surface of the steel plate. Each SSCC test piece thus collected was loaded with stress of 90 % of the actual yield stress (0.5 % YS) of the steel pipe.

The SSCC resistance was examined by a four-point bending SSCC test in accordance with EFC 16 at a hydrogen sulfide partial pressure of 1 bar using a NACE TM0177 Solution A solution. Likewise, the SSCC resistance was examined by a four-point bending SSCC test in accordance with EFC 16 at a hydrogen sulfide partial pressure of 0.1 bar and a carbon dioxide partial pressure of 0.9 bar using a NACE TM0177 Solution B solution. Further, the SSCC resistance was examined by a four-point bending SSCC test in accordance with EFC 16 at a hydrogen sulfide partial pressure of 2 bar and a carbon dioxide partial pressure of 3 bar using a NACE TM0177 Solution A solution. After immersion for 720 hr, in the case where no cracking was observed in both the test piece containing only the base metal and not containing the weld and the test piece containing both the weld and the base metal, the SSCC resistance was evaluated as good. In the case where cracking occurred in at least one of the test pieces, the SSCC resistance was evaluated as poor. The results are listed in Table 2.

[Evaluation of HIC resistance]

The HIC resistance was examined by a HIC test with 96 hr immersion at a hydrogen sulfide partial pressure of 1 bar using a NACE TM0177 Solution A solution. The HIC resistance was also examined by a HIC test with 96 hr immersion at a hydrogen sulfide partial pressure of 0.1 bar and a carbon dioxide partial pressure of 0.9 bar using a NACE TM0177 Solution B solution. In the case where the crack length ratio (CLR) was 10 % or less in the HIC test, the HIC resistance was evaluated as excellent. In the case where the CLR was 15 % or less, the HIC resistance was evaluated as good. In the case where the CLR was more than 15 %, the HIC resistance was evaluated as poor. The results are listed in Table 2.

The target range according to the present disclosure was as follows:
The tensile strength is 520 MPa or more as a high strength steel plate for a sour-resistant line pipe; The microstructure at a position of 0.25 mm below the surface of the steel plate and the microstructure at a t/2 position (plate thickness center position) are both bainitic microstructure; The maximum hardness of HV 0.5 at 0.25 mm below the surface of the steel plate is 230 or less; no cracking is observed in the SSCC test; and the crack length ratio (CLR) is 15 % or less in the HIC test.

Table 1

| Steel sample ID | Chemical composition (mass%) | | | | | | | | | | | | | | | | | | CP | Ar$_3$ temperature (°C) |
|---|---|---|---|---|---|---|---|---|---|---|---|---|---|---|---|---|---|---|---|---|
| | C | Si | Mn | P | S | Al | N | Mo | Ca | Cu | Ni | Cr | Nb | V | Ti | Zr | Mg | REM | | |
| A | 0.045 | 0.28 | 1.37 | 0.005 | 0.0007 | 0.036 | 0.0035 | 0.12 | 0.0030 | - | - | 0.25 | 0.030 | - | 0.012 | - | - | - | 0.96 | 773 |
| B | 0.050 | 0.31 | 1.32 | 0.004 | 0.0006 | 0.026 | 0.0038 | 0.20 | 0.0023 | - | - | 0.30 | - | - | - | - | - | - | 0.98 | 768 |
| C | 0.064 | 0.17 | 1.49 | 0.005 | 0.0006 | 0.029 | 0.0040 | 0.04 | 0.0026 | - | - | - | - | - | - | - | - | - | 1.00 | 768 |
| D | 0.040 | 0.20 | 1.38 | 0.005 | 0.0005 | 0.057 | 0.0043 | 0.30 | 0.0015 | 0.06 | 0.02 | - | 0.040 | - | 0.015 | - | - | - | 0.96 | 761 |
| E | 0.035 | 0.43 | 1.50 | 0.004 | 0.0007 | 0.032 | 0.0035 | 0.09 | 0.0039 | 0.15 | 0.10 | 0.20 | 0.035 | - | 0.010 | - | - | - | 0.95 | 760 |
| F | 0.026 | 0.25 | 1.46 | 0.005 | 0.0010 | 0.025 | 0.0039 | 0.15 | 0.0024 | - | - | 0.45 | 0.033 | 0.010 | 0.005 | - | - | - | 0.97 | 766 |
| G | 0.041 | 0.15 | 1.21 | 0.006 | 0.0006 | 0.042 | 0.0075 | 0.15 | 0.0036 | 0.30 | 0.10 | - | 0.050 | 0.029 | - | 0.005 | 0.005 | 0.001 | 0.91 | 777 |
| H | 0.075 | 0.16 | 1.09 | 0.004 | 0.0005 | 0.026 | 0.0037 | 0.28 | 0.0010 | - | - | 0.10 | - | - | - | - | - | - | 0.99 | 776 |
| I | 0.031 | 0.18 | 1.33 | 0.004 | 0.0005 | 0.033 | 0.0035 | 0.48 | 0.0017 | - | - | - | 0.026 | - | 0.013 | - | - | - | 0.94 | 756 |
| J | 0.082 | 0.08 | 1.30 | 0.006 | 0.0006 | 0.053 | 0.0044 | 0.20 | 0.0027 | - | - | - | 0.035 | - | 0.012 | - | - | - | 1.09 | 765 |
| K | 0.033 | 0.45 | 1.85 | 0.006 | 0.0009 | 0.040 | 0.0037 | 0.07 | 0.0025 | - | - | 0.20 | 0.035 | - | 0.010 | - | - | - | 1.09 | 743 |
| L | 0.056 | 0.32 | 1.10 | 0.005 | 0.0005 | 0.033 | 0.0036 | 0.28 | 0.0013 | - | - | - | 0.045 | - | - | - | - | - | 1.15 | 782 |
| M | 0.044 | 0.24 | 1.47 | 0.007 | 0.0005 | 0.035 | 0.0082 | 0.15 | 0.0020 | 0.10 | 0.08 | - | 0.037 | - | 0.020 | - | - | - | 1.01 | 760 |
| N | 0.032 | 0.20 | 1.45 | 0.008 | 0.0005 | 0.025 | 0.0040 | 0.10 | 0.0011 | 0.35 | 0.10 | - | 0.020 | - | 0.010 | - | - | - | 0.99 | 764 |
| O | 0.040 | 0.19 | 1.41 | 0.007 | 0.0006 | 0.046 | 0.0050 | 0.05 | 0.0019 | 0.15 | 0.15 | 0.17 | 0.032 | - | 0.013 | - | - | - | 0.99 | 767 |
| P | 0.028 | 0.30 | 1.38 | 0.006 | 0.0007 | 0.030 | 0.0036 | 0.24 | 0.0027 | - | - | 0.53 | 0.022 | - | 0.014 | - | - | - | 1.02 | 764 |
| Q | 0.030 | 0.16 | 1.30 | 0.005 | 0.0005 | 0.037 | 0.0038 | 0.52 | 0.0032 | 0.04 | 0.04 | 0.15 | 0.031 | - | 0.012 | - | - | - | 1.01 | 750 |
| R | 0.046 | 0.23 | 1.53 | 0.004 | 0.0005 | 0.032 | 0.0039 | 0.00 | 0.0022 | - | - | 0.32 | 0.042 | - | 0.015 | - | - | - | 0.97 | 769 |
| S | 0.019 | 0.15 | 1.25 | 0.005 | 0.0006 | 0.041 | 0.0045 | 0.13 | 0.0026 | - | - | 0.19 | 0.030 | - | 0.011 | - | - | - | 0.79 | 791 |
| T | 0.070 | 0.38 | 0.49 | 0.006 | 0.0005 | 0.033 | 0.0066 | 0.25 | 0.0027 | 0.20 | 0.15 | 0.31 | 0.055 | - | - | - | - | - | 0.85 | 812 |
| U | 0.027 | 0.46 | 1.35 | 0.005 | 0.0005 | 0.035 | 0.0009 | 0.17 | 0.0019 | - | - | - | 0.040 | - | 0.010 | - | - | - | 0.83 | 780 |
| V | 0.045 | 0.25 | 1.43 | 0.004 | 0.0006 | 0.045 | 0.0041 | 0.30 | 0.0030 | - | - | - | 0.039 | - | 0.015 | - | - | - | 0.97 | 758 |
| W | 0.035 | 0.20 | 1.50 | 0.006 | 0.0005 | 0.030 | 0.0036 | 0.21 | 0.0027 | 0.10 | 0.10 | 0.17 | 0.040 | 0.015 | 0.012 | - | - | - | 1.03 | 752 |

Note 1: The balance consists of Fe and inevitable impurities.

Note 2: The underlines indicate outside the range according to the present disclosure.

Table 2

| No. | Steel sample ID | Plate thickness (mm) | Heating temperature (°C) | Rolling finish temperature (°C) | Cooling start condition — Cooling start temperature (°C) | Cooling start condition — Cooling start temperature -Ar$_3$ (°C) | Cooling rate from 750 to 550°C (0.25mm below steel plate surface) (°C/s) | Cooling rate from 750 to 550°C (steel plate average) (°C/s) | Cooling stop temperature (0.25mm below steel plate surface) (°C) | Microstructure (0.25mm below steel plate surface) — Microstructure | Microstructure proportion other than B (%) | Microstructure (t/2 position) — Microstructure | Microstructure proportion other than B (%) | Area ratio of KAM value of 0.4 or more (0.25mm below steel plate surface) (%) | Yield stress (MPa) | Tensile strength (MPa) | Maximum hardness (0.25mm below steel plate surface) (HV0.5) | SSCC resistance of steel pipe — 1bar H$_2$S Sol.A | 0.1bar H$_2$S +0.9bar CO$_2$ Sol.B | 2bar H$_2$S +3bar CO$_2$ Sol.A | HIC resistance of steel pipe — 1bar H$_2$S Sol.A | 0.1bar H$_2$S +0.9bar CO$_2$ Sol.B | Category |
|---|---|---|---|---|---|---|---|---|---|---|---|---|---|---|---|---|---|---|---|---|---|---|---|
| 1 | A | 20 | 1140 | 890 | 840 | 67 | 30 | 28 | 465 | B | 0 | B | 0 | 25 | 493 | 580 | 214 | Good | Good | Good | Excellent | Excellent | Example |
| 2 | B | 20 | 1120 | 880 | 830 | 62 | 38 | 31 | 410 | B | 0 | B | 0 | 28 | 505 | 601 | 218 | Good | Good | Good | Excellent | Excellent | Example |
| 3 | C | 20 | 1100 | 870 | 820 | 52 | 23 | 20 | 430 | B | 0 | B | 0 | 20 | 471 | 567 | 212 | Good | Good | Good | Excellent | Excellent | Example |
| 4 | D | 25 | 1100 | 860 | 810 | 51 | 32 | 27 | 450 | B | 0 | B | 0 | 27 | 501 | 582 | 213 | Good | Good | Good | Excellent | Excellent | Example |
| 5 | E | 25 | 1080 | 870 | 820 | 60 | 47 | 38 | 380 | B | 0 | B | 0 | 36 | 499 | 594 | 221 | Good | Good | Good | Excellent | Excellent | Example |
| 6 | F | 25 | 1060 | 870 | 820 | 54 | 42 | 37 | 400 | B | 0 | B | 0 | 31 | 525 | 610 | 217 | Good | Good | Good | Excellent | Excellent | Example |
| 7 | G | 30 | 1080 | 880 | 840 | 63 | 20 | 18 | 250 | B | 0 | F+B | 5 | 29 | 490 | 576 | 217 | Good | Good | Good | Excellent | Excellent | Example |
| 8 | H | 30 | 1070 | 860 | 820 | 44 | 50 | 40 | 400 | B | 0 | B | 0 | 42 | 481 | 579 | 228 | Good | Good | Good | Excellent | Excellent | Example |
| 9 | I | 30 | 1060 | 860 | 810 | 54 | 34 | 30 | 430 | B | 0 | B | 0 | 27 | 500 | 595 | 214 | Good | Good | Good | Excellent | Excellent | Example |
| 10 | J | 20 | 1130 | 850 | 800 | 35 | 45 | 39 | 480 | B | 0 | B | 0 | 34 | 505 | 608 | 251 | Poor | Poor | Poor | Poor | Poor | Comparative Example |
| 11 | K | 20 | 1110 | 860 | 810 | 67 | 46 | 38 | 420 | B | 0 | B | 0 | 37 | 517 | 623 | 242 | Poor | Poor | Poor | Poor | Poor | Comparative Example |
| 12 | L | 20 | 1090 | 850 | 800 | 18 | 48 | 39 | 380 | B | 0 | B | 0 | 39 | 495 | 575 | 239 | Poor | Poor | Poor | Poor | Poor | Comparative Example |
| 13 | M | 25 | 1100 | 870 | 820 | 60 | 45 | 37 | 390 | B | 0 | B | 0 | 38 | 511 | 608 | 248 | Poor | Poor | Poor | Poor | Poor | Comparative Example |
| 14 | N | 25 | 1090 | 860 | 830 | 66 | 31 | 29 | 500 | B | 0 | B | 0 | 26 | 496 | 583 | 225 | Good | Poor | Good | Excellent | Excellent | Comparative Example |
| 15 | O | 25 | 1080 | 860 | 830 | 63 | 36 | 33 | 480 | B | 0 | B | 0 | 30 | 493 | 587 | 224 | Good | Poor | Good | Excellent | Excellent | Comparative Example |

Note 1: The underlines indicate outside the range according to the present disclosure.
Note 2: For microstructure, B denotes bainite, and F denotes ferrite.

Table 2 (cont'd)

| No. | Steel sample ID | Plate thickness (mm) | Heating temperature (°C) | Rolling finish temperature (°C) | Cooling start condition | | Cooling rate from 750 to 550°C | | Cooling stop temperature (0.25mm below steel plate surface) (°C) | Microstructure (0.25mm below steel plate surface) | | Microstructure (1/2 position) | | Area ratio of KAM value of 0.4 or more (0.25mm below steel plate surface) (%) | Yield stress (MPa) | Tensile strength (MPa) | Maximum hardness (0.25mm below steel plate surface) (HV0.5) | SSCC resistance of steel pipe | | | HIC resistance of steel pipe | | Category |
|---|---|---|---|---|---|---|---|---|---|---|---|---|---|---|---|---|---|---|---|---|---|---|---|
| | | | | | Cooling start temperature (°C) | Cooling start temperature -Ar₃ (°C) | 0.25mm below steel plate surface (°C/s) | steel plate average (°C/s) | | Microstructure | Microstructure proportion other than B (%) | Microstructure | Microstructure proportion other than B (%) | | | | | 1bar H₂S Sol.A | 0.1bar H₂S +0.9bar CO₂ Sol.B | 2bar H₂S +3bar CO₂ Sol.A | 1bar H₂S Sol.A | 0.1bar H₂S +0.9bar CO₂ Sol.B | |
| 16 | P | 30 | 1070 | 880 | 820 | 56 | 49 | 39 | 380 | B | 0 | B | 0 | 46 | 523 | 630 | 265 | Poor | Poor | Poor | Poor | Poor | Comparative Example |
| 17 | Q | 30 | 1060 | 860 | 820 | 70 | 48 | 39 | 360 | B | 0 | B | 0 | 41 | 511 | 608 | 250 | Poor | Poor | Poor | Poor | Poor | Comparative Example |
| 18 | R | 30 | 1050 | 840 | 810 | 41 | 38 | 34 | 450 | B | 0 | B | 0 | 30 | 518 | 602 | 231 | Good | Good | Poor | Excellent | Excellent | Comparative Example |
| 19 | A | 20 | 990 | 840 | 804 | 31 | 31 | 26 | 410 | B | 0 | B | 0 | 26 | 413 | 486 | 213 | Good | Good | Good | Excellent | Excellent | Comparative Example |
| 20 | B | 20 | 1000 | 790 | 755 | -13 | 25 | 23 | 400 | F+B | 15 | F+B | 10 | 23 | 406 | 478 | 203 | Good | Good | Good | Poor | Excellent | Comparative Example |
| 21 | C | 20 | 1050 | 840 | 810 | 42 | 18 | 14 | 470 | F+B | 15 | F+B | 10 | 18 | 400 | 476 | 201 | Good | Good | Good | Excellent | Excellent | Comparative Example |
| 22 | D | 25 | 1050 | 860 | 820 | 61 | 51 | 41 | 350 | B | 0 | B | 0 | 52 | 504 | 586 | 243 | Poor | Poor | Poor | Excellent | Excellent | Comparative Example |
| 23 | E | 25 | 1080 | 850 | 810 | 50 | 45 | 37 | 240 | B | 0 | B | 0 | 48 | 498 | 600 | 232 | Poor | Poor | Poor | Poor | Poor | Comparative Example |
| 24 | G | 20 | 1090 | 880 | 830 | 53 | 35 | 30 | 560 | F+B | 10 | F+B | 5 | 20 | 444 | 518 | 209 | Good | Good | Good | Excellent | Excellent | Comparative Example |
| 25 | F | 20 | 1040 | 830 | 780 | 14 | 53 | 42 | 240 | B | 0 | B | 0 | 55 | 489 | 590 | 247 | Poor | Poor | Poor | Excellent | Excellent | Comparative Example |
| 26 | S | 20 | 1120 | 910 | 860 | 69 | 25 | 21 | 500 | B | 0 | B | 0 | 20 | 430 | 495 | 205 | Good | Good | Good | Excellent | Excellent | Comparative Example |
| 27 | T | 25 | 1100 | 900 | 850 | 38 | 28 | 25 | 490 | B | 0 | B | 0 | 23 | 443 | 498 | 206 | Good | Good | Good | Excellent | Excellent | Comparative Example |
| 28 | U | 25 | 1110 | 890 | 840 | 60 | 30 | 25 | 470 | B | 0 | B | 0 | 22 | 440 | 501 | 207 | Good | Good | Good | Excellent | Excellent | Comparative Example |
| 29 | V | 35 | 1060 | 850 | 820 | 62 | 25 | 21 | 430 | B | 0 | B | 0 | 27 | 486 | 572 | 214 | Good | Good | Good | Excellent | Excellent | Example |
| 30 | W | 35 | 1050 | 840 | 810 | 58 | 23 | 20 | 450 | B | 0 | B | 0 | 25 | 495 | 583 | 213 | Good | Good | Good | Good | Excellent | Example |

Note 1: The underlines indicate outside the range according to the present disclosure.
Note 2: For microstructure B denotes bainite, and F denotes ferrite.

As can be understood from Table 2, No. 1 to No. 9, No. 29, and No. 30 are Examples satisfying the appropriate range according to the present disclosure in both the chemical composition and the production conditions. In each Example, the tensile strength was 520 MPa or more as a steel plate, the microstructure at a position of 0.25 mm below the surface of the steel plate and the microstructure at a t/2 position were both bainitic microstructure, the maximum hardness of HV 0.5 at 0.25 mm below the surface was 230 or less, and the SSCC resistance and the HIC resistance were both favorable.

In No. 10 to No. 18, the chemical composition of the steel plate was outside the range according to the present disclosure. In No. 10 to No. 13, HV 0.5 was more than 230, so that the SSCC resistance and the HIC resistance were inferior. In No. 14, the Cu content in the steel plate was excessively high, so that the SSCC resistance in an environment with low hydrogen sulfide partial pressure was inferior. In No. 15, the Ni content in the steel plate was excessively high, so that the SSCC resistance in an environment with low hydrogen sulfide partial pressure was inferior. In No. 16 and No. 17, HV 0.5 was more than 230, so that the SSCC resistance and the HIC resistance were inferior. In No. 18, the steel plate contained no Mo, so that the SSCC resistance in a very severe corrosion environment with a hydrogen sulfide partial pressure of 2 bar was inferior. No. 19 to No. 23 are Comparative Examples in which the chemical composition was within the range according to the present disclosure but the production conditions were outside the range according to the present disclosure. In No. 19, the slab heating temperature was low, so that microstructure homogenization and carbide dissolution were insufficient and the strength was low. In No. 20, the cooling start temperature was low, and lamellar microstructure in which ferrite precipitated formed, so that the strength was low and the HIC resistance was inferior. In No. 21, the controlled cooling conditions were outside the range according to the present disclosure, and the microstructure was ferritic and bainitic microstructure, so that the strength was low and the HIC resistance was inferior. In No. 22, the average cooling rate from 750 °C to 550 °C at 0.25 mm below the surface of the steel plate was more than 50 °C/s, and accordingly the KAM value at 0.25 mm below the surface was more than 0.4. Consequently, HV 0.5 was more than 230, so that the SSCC resistance was inferior. In No. 23, the cooling stop temperature was low, the dislocation density at 0.25 mm below the surface was high, and HV 0.5 was more than 230, so that the SSCC resistance was inferior. In No. 24, the cooling stop temperature was high, and bainite transformation was incomplete, as a result of which sufficient strength could not be obtained. In No. 25, the average cooling rate from 750 °C to 550 °C at 0.25 mm below the surface of the steel plate was more than 50 °C/s, and also the cooling stop temperature was low, as a result of which the area ratio of crystal grains having a KAM value of 0.4 or more at 0.25 mm below the surface was more than 50 %. Consequently, HV 0.5 was more than 230, and the SSCC resistance was inferior. In No. 26 to No. 28, the chemical composition of the steel plate was outside the range according to the present disclosure, so that the strength was low.

INDUSTRIAL APPLICABILITY

It is thus possible to provide a high strength steel plate for a sour-resistant line pipe excellent not only in HIC resistance but also in SSCC resistance in environments containing hydrogen sulfide with a partial pressure of more than 1 bar and in SSCC resistance in environments with a low hydrogen sulfide partial pressure of 1 bar or less.

**Claims**

1.   A high strength steel plate for a sour-resistant line pipe, comprising

   a chemical composition containing, in mass%, C: 0.020 % to 0.080 %, Si: 0.01 % to 0.50 %, Mn: 0.50 % to 1.80 %, P: 0.015 % or less, S: 0.0015 % or less, Al: 0.010 % to 0.080 %, N: 0.0010 % to 0.0080 %, Mo: 0.01 % to 0.50 %, and Ca: 0.0005 % to 0.0050 %, with a balance consisting of Fe and inevitable impurities,
   wherein a steel microstructure at 0.25 mm below a surface of the steel plate is bainitic microstructure, and an area ratio of crystal grains having a kernel average misorientation (KAM) value of 0.4 or more in the bainitic microstructure is 50 % or less,
   a maximum value of Vickers hardness at 0.25 mm below the surface of the steel plate is 230 Hv or less, and
   a tensile strength is 520 MPa or more.

2.   The high strength steel plate for a sour-resistant line pipe according to claim 1, wherein the chemical composition further contains, in mass%, one or more selected from the group consisting of Cu: 0.30 % or less, Ni: 0.10 % or less, and Cr: 0.50 % or less.

3.   The high strength steel plate for a sour-resistant line pipe according to claim 1 or 2, wherein the chemical composition further contains, in mass%, one or more selected from the group consisting of Nb: 0.005 % to 0.1 %, V: 0.005 % to 0.1 %, Ti: 0.005 % to 0.1 %, Zr: 0.0005 % to 0.02 %, Mg: 0.0005 % to 0.02 %, and REM: 0.0005 % to 0.02 %.

4. A production method for a high strength steel plate for a sour-resistant line pipe, comprising:

heating a slab having the chemical composition recited in any one of claims 1 to 3 to a temperature of 1000 °C to 1300 °C, and thereafter hot rolling the slab to obtain a steel plate; and
thereafter cooling the steel plate under conditions that:

a temperature of a surface of the steel plate at cooling start is $(Ar_3 - 10)$ °C or more;
an average cooling rate from 750 °C to 550 °C in terms of a temperature at 0.25 mm below the surface of the steel plate is 20 °C/s to 50 °C/s;
an average cooling rate from 750 °C to 550 °C in terms of an average temperature of the steel plate is 15 °C/s or more; and
a cooling stop temperature in terms of a temperature at 0.25 mm below the surface of the steel plate is 250 °C to 550 °C.

5. A high strength steel pipe using the high strength steel plate for a sour-resistant line pipe recited in any one of claims 1 to 3.

# FIG. 1

Steel pipe inner surface

Surface with mill scale unremoved

15mm

5mm

115mm

Steel pipe outer surface

## INTERNATIONAL SEARCH REPORT

| | International application No. |
|---|---|
| | PCT/JP2020/028166 |

### A. CLASSIFICATION OF SUBJECT MATTER

C21D 8/02(2006.01)i; C22C 38/00(2006.01)i; C22C 38/12(2006.01)i; C22C 38/58(2006.01)i
FI: C22C38/00 301F; C22C38/12; C22C38/58; C21D8/02 C

According to International Patent Classification (IPC) or to both national classification and IPC

### B. FIELDS SEARCHED

Minimum documentation searched (classification system followed by classification symbols)
C21D8/02; C22C38/00; C22C38/12; C22C38/58

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)
JSTPlus (JDreamIII)

### C. DOCUMENTS CONSIDERED TO BE RELEVANT

| Category* | Citation of document, with indication, where appropriate, of the relevant passages | Relevant to claim No. |
|---|---|---|
| X | JP 6460297 B1 (NIPPON STEEL & SUMITOMO METAL CORPORATION) 30.01.2019 (2019-01-30) paragraphs [0014], [0087]-[0101], tables 1, 3A | 3, 5 |
| X | WO 2016/056216 A1 (JFE STEEL CORPORATION) 14.04.2016 (2016-04-14) paragraphs [0014], [0060]-[0064], tables 1-2 | 3-5 |
| X | WO 2018/179512 A1 (JFE STEEL CORPORATION) 04.10.2018 (2018-10-04) paragraphs [0021], [0035], [0059]-[0069], tables 1-2 | 1-5 |
| X | WO 2018/181564 A1 (JFE STEEL CORPORATION) 04.10.2018 (2018-10-04) paragraphs [0023], [0037], [0040], [0062]-[0072], tables 1-2 | 1-5 |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 September 2020 (16.09.2020) | 29 September 2020 (29.09.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

| INTERNATIONAL SEARCH REPORT<br>Information on patent family members | | International application No.<br>PCT/JP2020/028166 | |
|---|---|---|---|
| Patent Documents referred in the Report | Publication Date | Patent Family | Publication Date |
| JP 6460297 B1 | 30 Jan. 2019 | (Family: none) | |
| WO 2016/056216 A1 | 14 Apr. 2016 | (Family: none) | |
| WO 2018/179512 A1 | 04 Oct. 2018 | EP 3604584 A1<br>paragraphs [0015], [0029], [0055]-[0063], tables 1-2<br>CN 110462080 A<br>KR 10-2019-0129957 A | |
| WO 2018/181564 A1 | 04 Oct. 2018 | EP 3604592 A1<br>paragraphs [0016], [0030], [0033], [0058]-[0066], tables 1-2<br>CN 110475894 A<br>KR 10-2019-0129097 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6369658 B

- JP 2011017048 A